(19) Europäisches Patentamt
European Patent Office
Office européen des brevets

(11) **EP 2 718 158 B1**

(12) **EUROPÄISCHE PATENTSCHRIFT**

(45) Veröffentlichungstag und Bekanntmachung des Hinweises auf die Patenterteilung:
**01.07.2015 Patentblatt 2015/27**

(21) Anmeldenummer: **12715951.5**

(22) Anmeldetag: **16.04.2012**

(51) Int Cl.:
***B60T 13/74*** *(2006.01)*

(86) Internationale Anmeldenummer:
**PCT/EP2012/056897**

(87) Internationale Veröffentlichungsnummer:
**WO 2012/167980 (13.12.2012 Gazette 2012/50)**

(54) **VERFAHREN ZUM BETREIBEN EINER BREMSANLAGE SOWIE BREMSANLAGE**

METHOD FOR OPERATING A BRAKE SYSTEM, AND BRAKE SYSTEM

PROCÉDÉ PERMETTANT DE FAIRE FONCTIONNER UN SYSTÈME DE FREINAGE ET SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.06.2011 DE 102011077313**

(43) Veröffentlichungstag der Anmeldung:
**16.04.2014 Patentblatt 2014/16**

(73) Patentinhaber: **Continental Teves AG&Co. Ohg 60488 Frankfurt (DE)**

(72) Erfinder: **BÖHM, Jürgen 65558 Oberneisen (DE)**

(56) Entgegenhaltungen:
**WO-A1-2006/111393      DE-A1-102009 008 944 DE-A1-102009 033 499**

**Beschreibung**

Die Erfindung betrifft ein Verfahren zum Betreiben einer Bremsanlage gemäß dem Oberbegriff von Anspruch 1 sowie eine Bremsanlage gemäß dem Oberbegriff von Anspruch 14.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen oder des Hauptbremszylinders stattfindet. Um dem Fahrzeugführer in der Betriebsart "Brake-by-wire" ein angenehmes Pedalgefühl zu vermitteln, umfassen die Bremsanlagen üblicherweise eine Bremspedalgefühl-Simulationseinrichtung. Bei diesen Bremsanlagen können die Radbremse auch ohne aktives Zutun des Fahrzeugführers aufgrund elektronischer Signale betätigt werden. Diese elektronischen Signale können beispielsweise von einem elektronischen Stabilitätsprogramm oder einem Abstandsregelsystem ausgegeben werden.

Aus der internationalen Patentanmeldung WO 2011/029812 A1 ist eine "Brake-by-wire"-Bremsanlage bekannt mit einer Druckbereitstellungseinrichtung umfassend eine hydraulische Zylinder-Kolben-Anordnung, deren einer Kolben von einem Elektromotor unter Zwischenschaltung eines Rotations-Translations-Getriebes betätigbar ist. Die Druckbereitstellungseinrichtung ist hydraulisch mit einer Druckmodulationseinheit verbunden, die pro Radbremse ein Einlassund ein Auslassventil aufweist. Die Bremsanlage weist einen Drucksensor zur Messung des erzeugten Druckes (Bremssystemdruck) der Druckbereitstellungseinrichtung auf. In der Anmeldung werden keine näheren Ausführungen dazu gemacht, wie eine Einstellung oder eine Einregelung eines vorgegebenen Sollwertes für den Druck der Druckbereitstellungseinrichtung durchgeführt werden soll. Insbesondere wird nicht angesprochen, wie ein eingestellter Bremsdruck überprüft wird, falls der Drucksensor ausfällt.

Das Dokument DE 10 2009 008 944 A1 offenbart ein Verfahren zum Betreiben einer Bremsanlage sowie eine Bremsanlage gemäß dem Oberbegriff des unabhängigen Anspruchs 1 bzw. 14.

Es ist daher Aufgabe der vorliegenden Erfindung, eine Bremsanlage sowie ein Verfahren zum Betreiben einer Bremsanlage mit einer elektrisch steuerbaren Druckbereitstellungseinrichtung, welche eine Zylinder-Kolben-Anordnung mit einem hydraulischen Druckraum umfasst, deren Kolben durch einen elektromechanischen Aktuator zur Erzeugung eines Drucks in dem Druckraum betätigbar ist, bereitzustellen, welches eine zuverlässige und korrekte Einstellung eines gewünschten Druckes ermöglicht.

Diese Aufgabe wird erfindungsgemäß durch ein Verfahren gemäß Anspruch 1 und eine Bremsanlage gemäß Anspruch 14 gelöst.

Der Erfindung liegt der Gedanke zugrunde, den Druck einer Zylinder-Kolben-Anordnung mit einem hydraulischen Druckraum, deren Kolben durch einen elektromechanischen Aktuator zur Druckerzeugung in dem hydraulischen Druckraum verschiebbar ist, aus zumindest zwei zuverlässig ermittelbaren Größen des elektromechanischen Aktuators, nämlich einem Aktuatormoment und einer Aktuatorposition, unter Berücksichtigung eines Druckmodells zu bestimmen.

Das vorgeschlagene Verfahren bietet den Vorteil, dass der anhand des Druckmodells abgeschätzte Druckwert auch dann zur Verfügung steht, wenn ein zur Messung des Druckes vorhandener Drucksensor kein Signal liefert, z.B. aufgrund eines Defektes oder weil der Messbereich des Drucksensors überschritten ist. Wenn in der Bremsanlage aus anderen Gründen bereits Mittel zur Ermittlung des Aktuatormoments und der Aktuatorposition vorhanden sind, so ist das erfindungsgemäße Verfahren kostengünstig in einer Steuer- oder Regeleinheit der Bremsanlage, ohne z.B. weitere Sensoren, umsetzbar.

Gemäß einer bevorzugten Ausführungsform des erfindungsgemäßen Verfahrens wird der mit Hilfe des Aktuatormoments und der Aktuatorposition bestimmte Druckwert als Ist-Druck zur Einstellung oder Einregelung eines vorgegebenen Soll-Drucks der Druckbereitstellungseinrichtung herangezogen. Hierzu werden der Ist-Druck und der Soll-Druck besonders bevorzugt einem Druckregler zugeführt, welcher ein Ansteuersignal für den elektromechanischen Aktuator ausgibt.

Gemäß einer Weiterbildung des erfindungsgemäßen Verfahrens wird der Druck in dem hydraulischen Druckraum zusätzlich mittels eines Drucksensors gemessen. Die Messwerte des Drucksensors sollten vorteilhafterweise zumindest zeitweise oder bei Vorliegen einer Bedingung, z.B. bei kleinen Drücken, vorliegen, damit eine Überprüfung oder Anpassung des verwendeten Druckmodells möglich ist.

Anhand des gemessenen Drucks der Druckbereitstellungseinrichtung, des ermittelten Aktuatormoments und der ermittelten Aktuatorposition ($\varphi_{Akt}$) wird bevorzugt eine Bestimmung oder Anpassung von zumindest einem Parameter des Druckmodells durchgeführt. Die Bestimmung oder Anpassung des oder der Parameter des Druckmodells wird gemäß einer Weiterbildung der Erfindung durchgeführt, wenn der gemessene Druck kleiner oder gleich einem ersten Schwellenwert ist, da dann zuverlässige Messwerte des Drucksensors zu erwarten sind. Wenn der gemessene Druckwert größer als der erste Schwellenwert ist, werden der oder die Parameter des Druckmodells beibehalten. Dann kann eine Berechnung eines Drucks anhand des Druckmodells durchgeführt werden.

Im Falle von zwei oder mehr anzupassenden Parametern des Druckmodells wird bei der Anpassung der Parameter bevorzugt stets nur ein einziger der Parameter zu einem Zeitpunkt oder in einem Zeitintervall verändert. Zusätzlich ist besonders bevorzugt das Maß der Änderung des Parameters vorgegeben.

Vorteilhafterweise wird der gemessene Druck der Druckbereitstellungseinrichtung als Ist-Druck zur Einstellung oder Einregelung des Soll-Drucks herangezogen, solange der gemessene Druckwert kleiner oder gleich einem zweiten Schwellenwert ist. In diesem Druckbereich kleiner Drücke besitzt der gemessene Druck, die Funktionsfähigkeit des Drucksensors vorausgesetzt, die höchste Genauigkeit.

Gemäß einer weiteren bevorzugten Ausführungsform des erfindungsgemäßen Verfahrens wird aus dem gemessenen Druck der Druckbereitstellungseinrichtung und dem aus Aktuatormoment und Aktuatorposition bestimmten Druckwert ein Ist-Druckwert berechnet, der als Ist-Druck zur Einstellung oder Einregelung des vorgegebenen Soll-Drucks herangezogen wird. Besonders bevorzugt wird der Ist-Druckwert durch gewichtete Mittelung mit einem Gewichtungsfaktor aus dem gemessenen Druckwert und dem bestimmten Druckwert berechnet, wobei der Gewichtungsfaktor in Abhängigkeit von dem gemessenen Druck und einem Messbereichsendwert des Drucksensors gewählt wird.

Wenn der gemessene Druckwert oder der berechnete Druckwert größer als ein dritter Schwellenwert ist, wird gemäß einer Weiterbildung der Erfindung der aus Aktuatormoment und Aktuatorposition anhand des Druckmodells bestimmte Druckwert als Ist-Druck zur Einstellung oder Einregelung des Soll-Drucks herangezogen.

Bevorzugt ist der dritte Schwellenwert kleiner als ein Messbereichsendwert des Drucksensors gewählt. Hierdurch wird schon vor Erreichen des Messbereichsendwertes des Drucksensors auf eine Regelung basierend allein auf dem aus den beiden Aktuatorgrößen berechneten Druckwert umgeschaltet.

Der aus Aktuatormoment und Aktuatorposition bestimmte Druckwert wird bevorzugt als Ist-Druck zur Einstellung oder Einregelung des Soll-Drucks herangezogen, wenn ein Ausfall des Drucksensors erkannt wird oder kein gemessener Druck vorliegt, da sonst keine ausreichend genaue Regelung des Drucks möglich wäre.

Der Druck der Druckbereitstellungseinrichtung wird bevorzugt zur Betriebsbremsbetätigung der Bremsen bzw. Bremsanlage herangezogen.

Bevorzugt ist/sind die Radbremse(n) hydraulisch mit dem Druckraum der Zylinder-Kolben-Anordnung verbunden. Zwischen einer, insbesondere jeder, Radbremse und dem Druckraum ist besonders bevorzugt ein elektrisch ansteuerbares Einlassventil angeordnet, mit welchem die Radbremse von dem Druckraum hydraulisch abtrennbar ist.

Bevorzugt ist eine, insbesondere jede, Radbremse über ein elektrisch ansteuerbares Auslassventil mit einem Bremsflüssigkeitsvorratsbehälter verbindbar.

Bevorzugt wird der Soll-Druck für die Druckbereitstellungseinrichtung durch eine elektronische Steuer- und Regeleinheit vorgegeben, in welcher der Bremswunsch des Fahrers bei Betätigung des Bremspedals anhand zumindest einer sensorisch erfassten Größe, z.B. des Bremspedalhubs, bestimmt wird. Besonders bevorzugt umfasst die Steuer- und Regeleinheit auch einen übergeordneten Regler, insbesondere einen Antiblockier- und/oder Fahrdynamik-Regler, der den Soll-Druck vorgibt. Es ist vorteilhaft, wenn diese Steuer- und Regeleinheit auch die Druckbereitstellungseinrichtung ansteuert.

Weitere bevorzugte Ausführungsformen der Erfindung ergeben sich aus den Unteransprüchen und der nachfolgenden Beschreibung anhand von Figuren.

Es zeigen:

Fig. 1 ein Prinzipschaltbild einer elektrohydraulischen Bremsanlage zur Durchführung eines erfindungsgemäßen Verfahrens, und

Fig. 2 ein Blockschaltbild zu einem ersten Ausführungsbeispiel eines erfindungsgemäßen Verfahrens.

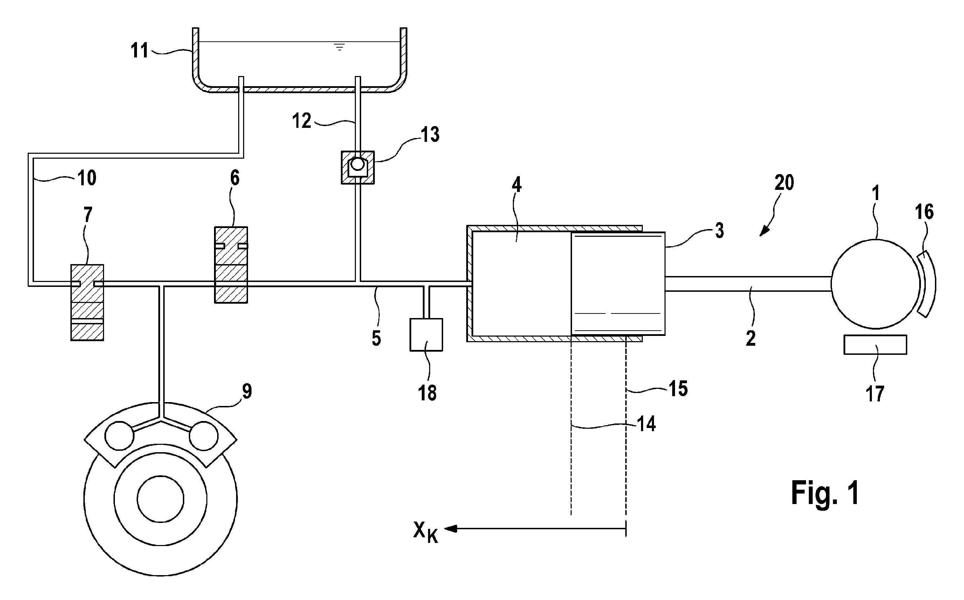

In Fig. 1 ein Prinzipschaltbild einer elektrohydraulischen Bremsanlage für ein regelbares Rad eines hydraulisch gebremsten Fahrzeugs schematisch dargestellt. Die Bremsanlage umfasst eine Druckbereitstellungseinrichtung 20, deren Druckraum 4 über eine hydraulische Verbindungsleitung 5 mit einer hydraulisch betätigbaren Radbremse 9 verbunden ist. Zwischen Druckraum 4 und Radbremse 9 ist ein, z.B. stromlos offenes, Einlassventil 6 angeordnet. Radbremse 9 ist über eine Rücklaufleitung 10 mit einem Druckmittelvorratsbehälter 11 verbindbar. In der Rücklaufleitung 10 ist vorteilhafterweise ein, z.B. stromlos geschlossenes, Auslassventil 7 angeordnet. Zum Nachsaugen von Druckmittel in den Druckraum 4 der Druckbereitstellungseinrichtung 20 ist Druckraum 4 mit dem Druckmittelvorratsbehälter 11 verbunden. Beispielsgemäß ist in der hydraulischen Leitung 12 zwischen Druckraum 4 und Druckmittelvorratsbehälter 11 ein in Richtung der Druckbereitstellungseinrichtung 20 öffnendes Rückschlagventil angeordnet.

Druckbereitstellungseinrichtung 20 wird beispielsgemäß durch eine Zylinder-Kolben-Anordnung mit einem Druckraum 4 gebildet, wobei der Druckraum 4 durch einen Kolben 3 begrenzt wird. Kolben 3 ist mittels eines elektromechanischen Aktuators verschiebbar, so dass ein gewünschter Druck in dem Druckraum 4 erzeugt werden kann. Der elektromechanische Aktuator umfasst beispielsgemäß einen Elektromotor 1 und ein Getriebe 2, z.B. ein Rotations-Translations-Getriebe.

Die Bremsanlage umfasst weiterhin beispielsgemäß einen Drucksensor 18 zur Messung des in Druckraum 4 vorliegenden Druckes $P_V$.

Außerdem umfasst die Bremsanlage einen Positionssensor 16 zur Messung einer Aktuatorposition $\varphi_{Akt}$ und ein Mittel 17 zur Ermittlung eines Aktuatormoments $M_{Akt}$. Vorteilhafterweise wird eine Motorwinkelposition $\varphi_{Akt}$, z.B. eine Rotorlage des Elektromotors 1, mittels Sensor 16 ermittelt. Ein Motordrehmoment $M_{Akt}$ wird z.B. anhand des Motorstroms ermittelt. Bei dem Elektromotor 1 handelt es sich z.B. um einen elektronisch kommutierten Motor. Das Motormoment $M_{Akt}$ und die aktuelle Motorwinkelposition $\varphi_{Mot}$ stehen als sogenannte Aktuatorsignale für das weiter unten beschriebene Verfahren zur Druckschätzung zur Verfügung.

Stellt der Fahrer mittels einer Bremspedalbetätigung eine Druckanforderung, so wird diese elektronisch mit Hilfe des Elektromotors 1, des Getriebes 2 und des Tauchkolbens 3 in dem hydraulischen Druckraum 4 umgesetzt, indem der Kolben 3 um einen Weg $X_K$ aus seiner Ruheposition 15 in eine Position 14 gefahren wird. So wird ein bestimmtes Volumen des Druckmittels aus Druckraum 4 über Leitung 5 und das zunächst geöffnete Einlassventil 6 in die Radbremse 9 verschoben. Damit wird in der Radbremse 9 ein Bremsdruck erzeugt. Ein Bremsdruckabbau kann erfolgen, indem der Kolben 3 wieder in Richtung der Ruheposition 15 zurückgefahren wird. Ein schneller Bremsdruckabbau, wie er im Falle einer Antiblockier-Regelung benötigt wird, ist aber auch über die Ventilkombination 6, 7 möglich, indem das Einlassventil 6 geschlossen und das Auslassventil 7 für eine bestimmte Zeit geöffnet wird. Dann strömt Druckmittel aus der Radbremse 9 durch das Auslassventil 7 in Druckmittelvorratsbehälter 11. Diese Maßnahme des Druckabbaus ist insbesondere dann sinnvoll, wenn Druckraum 4 mehrere Radbremsen 9 mit dem Druck beaufschlagt.

Fig. 1 stellt nur ein Prinzipschaltbild einer elektrohydraulischen Bremsanlage zur Durchführung eines erfindungsgemäßen Verfahrens dar. Grundsätzlich kann die Bremsanlage um beliebig viele Radbremsen 9 erweitert werden, indem mehrere Leitungen 5 zu den Radbremsen geführt werden, wobei jeder Radbremskreis bevorzugt über ein eigenes Ventilpaar 6, 7 verfügt. Um aus Sicherheitsgründen eine Mehrkreisigkeit der Bremsanlage zu bilden, können in der Druckbereitstellungseinrichtung mehrere Kolben 3 und mehrere Druckräume 4 vorgesehen werden. Für einen PKW mit vier Radbremsen 9 ist eine Zweikreisigkeit sinnvoll, wobei jeweils zwei Radbremsen 9 mit einem von zwei Druckräumen 4 verbunden sind.

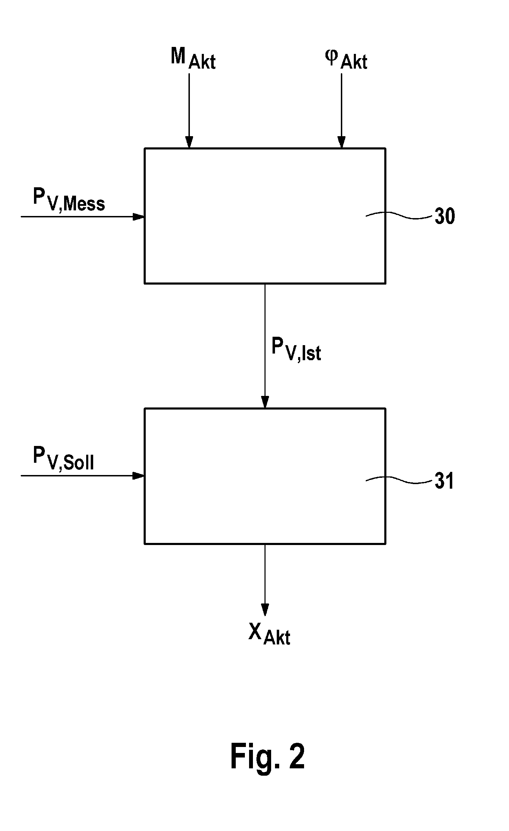

In Fig. 2 ist ein Blockschaltbild zur Veranschaulichung eines ersten Ausführungsbeispiels eines erfindungsgemäßen Verfahrens dargestellt. Aus einem ermittelten (z.B. gemessenen bzw. direkt aus Messgrößen abgeleiteten) Aktuatormoment $M_{Akt}$ und einer ermittelten (z.B. gemessenen bzw. direkt aus Messgrößen abgeleiteten) Aktuatorposition $\varphi_{Akt}$ wird unter Zugrundelegung eines Druckmodells in Block 30 ein Druckwert für den aktuellen Druck des Druckraums 4 ermittelt. Dieser Druckwert wird dann als Ist-Druck $P_{V,Ist}$ an einen Regler 31 weitergeleitet, welcher Ansteuersignale $X_{Akt}$ für den elektromechanischen Aktuator der Druckbereitstellungseinrichtung 20 bestimmt, um den Ist-Druck $P_{V,Ist}$ auf einen vorgegebenen Soll-Druck $P_{V,Soll}$ einzustellen bzw. einzuregeln.

Das beispielsgemäße Verfahren umfasst also eine modellbasierte Ermittlung (Block 30) einer Druckinformation (Ist-Druck $P_{V,Ist}$) basierend auf den Motorgrößen Aktuatormoment $M_{Akt}$ und Aktuatorposition $\varphi_{Akt}$. Die Druckinformation $P_{V,Ist}$ wird dann zur Einstellung/Regelung von Drücken oder Druckverläufen der Druckbereitstellungseinrichtung 20 mittels des elektromotorisch angetriebenen Tauchkolbens 3 herangezogen.

Zur direkten Erfassung des Druckwertes $P_V$ im hydraulischen Druckraum 4 kann ein Drucksensor (siehe z.B. Drucksensor 18 in Fig. 1) verwendet werden, welcher jedoch über einen endlichen Druckmessbereich verfügt. Mittels des Drucksensors sind demnach nur Drücke zwischen Null und dem Messbereichsendwert $P_{Mess,Max}$ messbar ($0 \leq P_{V,Mess} \leq P_{Messs,Max}$). Ergibt sich nun aufgrund der Solldruckvorgabe $P_{V,Soll}$ die Notwendigkeit mit Hilfe des Elektromotors 1 Drücke einzustellen, die über diesen Druckmessbereich hinausgehen, also $P_{V,Soll} > P_{Mess,Max}$, so kann anhand des Druckmodells aus dem Aktuatormoment $M_{Akt}$ und der Aktuatorposition $\varphi_{Akt}$ der aktuelle Druck der Druckbereitstellungseinrichtung $P_V$ berechnet und zur Regelung herangezogen werden.

Wie Fig. 2 zu entnehmen ist, wird beispielsgemäß der gemessene Druck $P_{V,Mess}$ ebenfalls in Block 30 berücksichtigt. Der gemessene Druck $P_{V,Mess}$ kann bei der Berechnung des Ist-Drucks $P_{V,Ist}$ und/oder bei einer Bestimmung oder Anpassung eines oder mehrerer Parameter des Druckmodells eingehen. Ein Beispiel zur Berechnung des Ist-Drucks $P_{V,Ist}$ sowie ein Beispiel eines Druckmodells werden im Folgenden detaillierter erläutert.

Das beispielhafte Modell berücksichtigt die in Fig. 1 beschriebenen Komponenten Elektromotor 1, Getriebe 2 und Tauchkolben 3 in einem hydraulischen Druckraum 4. Das Modell beschreibt das statische und dynamische Verhalten des Motors 1, der zur Erzeugung des geforderten Druckes $P_{V,Soll}$ im Druckraum 4 ein entsprechendes Motormoment $M_{Akt}$ einstellt. Das Modell kann durch die folgende Gleichung (1) beschrieben werden:

$$J \cdot d\omega_{Akt}/dt = M_{Akt} - M_{Hydr} - d \cdot \omega_{Akt} - (M_c + \alpha \cdot M_{Hydr}) \cdot \mathrm{sign}(\omega_{Akt})$$

mit

J: das von Elektromotor 1 zu überwindende Gesamtträgheitsmoment,
$\omega_{Akt}$: die Motorwinkelgeschwindigkeit, die aus der Motorwinkelposition $\varphi_{Akt}$ durch Differentiation bestimmt werden

kann,

$d\omega_{Akt}/dt$: zeitliche Ableitung der Motorwinkelgeschwindigkeit,

$M_{Akt}$: das Motormoment,

d: eine Dämpfungskonstante,

$M_c$: der von der Drehrichtung des Motors 1 abhängige konstante Reibungsanteil,

$M_{Hydr}$: das Moment, welches sich aufgrund des von Motor 1 aufgebrachten hydraulischen Druckes $P_V$ im Druckraum 4 ergibt und als Lastmoment auf den Elektromotor 1 wirkt,

$\alpha$: Faktor, der den Einfluss des Lastmomentes $M_{Hydr}$ auf den statischen, von der Drehrichtung des Motors abhängigen konstanten Reibungsanteil $M_c$ berücksichtigt,

sign: Vorzeichenfunktion.

Das Moment $M_{Hydr}$ hängt vom Druck $P_V$ ab:

$$M_{Hydr} = f(P_V), \qquad (2)$$

wobei die Abhängigkeits-Funktion f im Wesentlichen durch die Übersetzung des Getriebes 2 und den Querschnitt des Tauchkolbens 3 bestimmt wird.

In einem einfachen Fall kann die Funktion f durch einen proportionalen Zusammenhang mit einer Proportionalitätskonstanten $K_1$ beschrieben werden:

$$M_{Hydr} = K_1 \bullet P_V \qquad (3)$$

Um das oben beschriebene Modell zur Ermittlung des Druckes $P_V$ sinnvoll nutzen zu können, sollten die im Modell verwendeten Parameter hinreichend genau bekannt sein. Hierbei unterliegen allerdings die Parameter, welche das Verhalten der Reibung beschreiben, gewissen Änderungen, die sich im Wesentlichen aufgrund von Umgebungsbedingungen, Variantenstreuung und Verschleiß ergeben.

Vorteilhafterweise werden daher in den Druckbereichen, in denen ein gültiges und innerhalb des Messbereichs liegendes Drucksignal $P_{V,Mess}$ vorliegt, die die Reibung repräsentierenden Parameter ermittelt oder korrigiert. Hierzu werden neben dem gemessenen Drucksignal $P_{V,Mess}$ das ermittelte Motormoment $M_{Akt}$ und die gemessene Motorwinkelposition $\varphi_{Art}$ herangezogen. Für den Fall, dass der im hydraulischen Druckraum 4 einzustellende Druck sich außerhalb des Messbereiches $P_{Mess,Max}$ befindet, wird mittels der korrigierten Parameter sowie den noch ermittelbaren Größen Motormoment $M_{Akt}$ und Motorwinkelposition $\varphi_{Akt}$ eine Druckinformation $P_{V,Ist}$ modellbasiert ermittelt und mittels des Reglers 31 eingestellt.

Legt man ein Modell entsprechend Gleichung (1) zugrunde, so handelt es sich bei den im laufenden Betrieb zu aktualisierenden Parameter um den von der Drehrichtung des Motors abhängigen konstanten Reibungsanteil $M_c$ sowie den, den Einfluss des Lastmomentes auf $M_c$ repräsentierenden Faktor $\alpha$. Im Folgenden werden die während des Betriebes ermittelten oder korrigierten (Schätz)Werte der Parameter $M_c$ und $\alpha$ mit $M_{c,Est}$ und $\alpha_{Est}$ bezeichnet.

Vorausgesetzt die Parameter des Druckmodells sind bekannt (z.B. Parameter J und d fest vorgegeben, die Parameter $M_{c,Est}$ und $\alpha_{Est}$ repräsentieren die an die aktuellen Bedingungen angepassten Werte für die Parameter $M_c$ und $\alpha$), so kann ein Druckwert $P_{V,Est}$ entsprechend den Gleichungen (1) und (2) wie folgt aus dem ermittelten Motormoment $M_{Akt}$ und der gemessenen Motorwinkelposition $\varphi_{Akt}$ berechnet werden:

$$P_{V,Est} = f^{-1}(M_{Hydr,Est}) \qquad (4)$$

mit

$$M_{Hydr,Est} = \frac{M_{Akt} - J \cdot d\omega_{Akt}/dt - d \cdot \omega_{Akt} - M_{c,Est} \cdot sign(\omega_{Akt})}{(1 + \alpha_{Est}) \cdot sign(\omega_{Akt})} \qquad (5)$$

Hierbei ist $f^{-1}$ die Umkehrfunktion der Funktion f aus Gleichung (2). Für den einfachen Fall gemäß Gleichung (3) gilt:

$$P_{V,Est} = M_{Hydr,Est}/K_1 \qquad (6)$$

Der Index "Est" kennzeichnet hierbei, dass es sich bei den Signalen $P_{V,Est}$ und $M_{Hydr,Est}$ um aus Motorsignalen berechnete Modellsignale handelt.

Zur Ermittlung bzw. Aktualisierung der varianten Parameter $M_{c,Est}$ sowie $\alpha_{Est}$ wird beispielsgemäß die Abweichung e zwischen ermitteltem (gemessenem) Motormoment $M_{Akt}$ und aufgrund der Modells der Gleichung (1) berechneten Motormoments $M_{Akt,Est}$ betrachtet:

$$e = M_{Akt} - M_{Akt,Est} \qquad (7)$$

wobei

$$M_{Akt,Est} = J \cdot d\omega_{Akt}/dt + M_{Hydr} + d \cdot \omega_{Akt}$$
$$+ (M_{c,Est} + \alpha_{Est} \cdot M_{Hydr}) \cdot sign(\omega_{Akt}) \qquad (8)$$

Das Moment $M_{Hydr}$ wird gemäß Gleichung (2) bzw. speziell Gleichung (3) aus dem gemessenen Druck $P_{V,Mess}$ bestimmt.

Da beide Parameter $M_{c,Est}$ und $\alpha_{Est}$ von der Drehrichtung der Aktuatorgeschwindigkeit $sign(\omega_{Akt})$ abhängen, sind bekannte Parameterschätzverfahren, welche auf der Minimierung eines quadratischen Gütekriteriums basieren, nicht sinnvoll anwendbar. Bevorzugt wird daher in jeder Reglerloop situationsbedingt immer nur ein Parameter korrigiert bzw. angepasst, wobei die Korrektur/Änderung in kleinen und festen Stufungen vorgenommen wird. Die Entscheidung, welcher Parameter aktuell angepasst wird, hängt beispielsgemäß von dem während der Bremsung vorliegenden Druck $P_V$ und damit von der Größe $M_{Hydr}$ ab. Ist das Moment $M_{Hydr}$ kleiner als ein vorgegebener Grenzwert $M_{Hydr,1}$ ($0 < M_{Hydr} < M_{Hydr,1}$), so wird angenommen, dass die Abweichung e (siehe Gleichung (7)) hauptsächlich von dem Parameter $M_c$ verursacht wird, und dieser Parameter wird dann um einen (vorgegebenen) Wert $\Delta M_{c,Korr}$ korrigiert. Bei höheren Druckwerten $P_V$ nimmt der Einfluss des Lastmomentes $M_{Hydr}$ auf die von der Drehrichtung abhängige Reibung zu, sodass in diesem Fall der Parameter $\alpha$ um einen vorgegebenen Wert $\Delta\alpha_{Korr}$ korrigiert wird.

Gemäß einem vorteilhaften Ausführungsbeispiel kann ein Korrekturwert, z.B. der Korrekturwert $\Delta\alpha_{Korr}$, auch abhängig von der Größe der Abweichung e (siehe Gleichung (7)) gewählt/vorgegeben werden. Beispielsweise können zwei Grenzwerte $e_1$ und $e_2$ für die Abweichung e vorgegeben werden, sodass der Korrekturwert $\Delta\alpha_{Korr}$ für den Parameter $\alpha_{Est}$ dann wie folgt gewählt wird:

$$\text{Für } 0 < |e| < e_1: \qquad \Delta\alpha_{Korr} = \Delta\alpha_{Korr,1}$$
$$\text{Für } e_1 < |e| < e_2: \qquad \Delta\alpha_{Korr} = \Delta\alpha_{Korr,2} \qquad (9)$$
$$\text{Für } e_2 < |e|: \qquad \Delta\alpha_{Korr} = \Delta\alpha_{Korr,3}$$

Zusätzlich oder alternativ kann für die Korrekturwerte des Parameters $M_{c,Est}$ entsprechend vorgegangen werden.

Gemäß einem weiteren Ausführungsbeispiel eines erfindungsgemäßen Verfahrens werden zwei Schwellenwerte $P_1$ und $P_2$ sowie ein dritter Schwellenwert $P_{Mess,Max}-\Delta P$ (abhängig von dem Messbereichsendwert $P_{Mess,Max}$) für den Druckwert der Druckbereitstellungseinrichtung vorgegeben, wobei gilt:

$$0 < P_1 \leq P_2 < P_{Mess,Max}-\Delta P \leq P_{Mess,Max} \qquad (10)$$

Der dritte Schwellenwert $P_{Mess,Max}-\Delta P$ liegt beispielsgemäß um eine Sicherheits-Druckdifferenz $\Delta P$ niedriger als der Messbereichsendwert $P_{Mess,Max}$. Die Sicherheits-Druckdifferenz $\Delta P$ liegt z.B. im Bereich einiger bar.

Ist der mittels des Drucksensors gemessene Druck $P_{V,Mess}$ kleiner oder gleich dem ersten Schwellenwert $P_1$ ($P_{V,Mess} \leq P_1$), so findet die Ermittlung oder Korrektur der varianten Parameter entsprechend der vorangegangenen Beschreibung statt, andernfalls ($P_{V,Mess} > P_1$) werden alle Modellparameter in ihrem aktuellen Stand beibehalten und es wird eine modellbasierte Ermittlung des Druckwertes $P_{V,Est}$ auf der Basis der Aktuatorsignale Motormoment $M_{Akt}$ und Motorwinkelposition $\varphi_{Art}$ , z.B. entsprechend Gleichungen (4) und (5) und der zugehörige Beschreibung, vorgenommen.

Bezüglich der Bereitstellung einer Druckinformation $P_{V,Ist}$ für den Regler 31 wird beispielsgemäß folgendermaßen vorgegangen:

Solange das mittels des Drucksensors messbare Drucksignal $P_{V,Mess}$ kleiner oder gleich dem zweiten Schwellenwert $P_2$ ist ($P_{V,Mess} \leq P_2$, Bereich A), wird der Druck-Istwert $P_{V,Ist}$ durch den gemessenen Druckwert $P_{V,Mess}$ angegeben, also

$$P_{V,Ist}^{A} = P_{V,Mess} .$$

Im Bereich B, wenn der gemessene Druck $P_{V,Mess}$ größer als der zweite Schwellenwert $P_2$ und kleiner als der dritte Schwellenwert $P_{Mess,Max}$-$\Delta P$ ist ($P_2 < P_{V,Mess} < (P_{Mess,Max}-\Delta P)$), gilt eine Übergangsbetrachtung, bei der beide verfügbaren Druckinformationen, nämlich der gemessene Druck $P_{V,Mess}$ und der aus Aktuatormoment $M_{Akt}$ und Aktuatorposition $\varphi_{Akt}$ berechnete Druckwert $P_{V,Est}$, zur Ermittlung des Druck-Istwertes $P_{V,Ist}$ gewichtet herangezogen werden:

$$P_{V,Ist}^{B} = \lambda \bullet P_{V,Mess} + (1-\lambda) \bullet P_{V,Est}$$

Der Gewichtungsfaktor $\lambda$ bestimmt sich vorteilhafterweise aus dem Abstand, den das gemessene Drucksignal $P_{V,Mess}$ von seinem Messbereichsendwert $P_{Mess,Max}$ entfernt ist, dies ist z.B. durch den folgenden Zusammenhang gegeben:

$$\lambda = (P_{Mess,Max} - \Delta P - P_{V,Mess}) / (P_{Mess,Max} - \Delta P - P_2)$$

Liegt der gemessene Druck $P_{V,Mess}$ oberhalb des dritten Schwellenwertes $P_{Mess,Max}$-$\Delta P$ (im Bereich C, $P_{V,Mess} \geq (P_{Mess,Max}-\Delta P)$), so wird dem Druckregler 31 als Druckinformation der geschätzte (aus Aktuatormoment $M_{Akt}$ und Aktuatorposition $\varphi_{Akt}$ berechnete) Wert $P_{V,Est}$ zur Regelung zugeführt, also

$$P_{V,Ist}^{C} = P_{V,Est}$$

Die Bereitstellung eines aus den Motorsignalen $M_{Akt}$, $\varphi_{Akt}$ ermittelten Drucksignals $P_{V,Est}$ wird vorteilhafterweise auch vorgenommen, wenn aufgrund einer Überwachungsfunktion ein Ausfall des Drucksensors erkannt wurde. Auf Basis der bis zu dem Ausfall mit gültigen Drucksensorwerten $P_{V,Mess}$ ermittelten bzw. korrigierten Modellparametern wird dann die Druckregelung und damit die Bereitstellung eines gewünschten Druckes der Druckbereitstellungseinrichtung für einen gewissen Zeitraum und gegebenenfalls mit reduziertem Komfort und verringerter Dynamik weiterhin vorgenommen, indem der geschätzte Druckwert $P_{V,Est}$ zur Regelung herangezogen wird ($P_{V,Ist} = P_{V,Est}$) .

**Patentansprüche**

1. Verfahren zum Betreiben einer Bremsanlage, insbesondere für Kraftfahrzeuge, mit einer elektrisch steuerbaren Druckbereitstellungseinrichtung (20) zur hydraulischen Betätigung zumindest einer Bremse (9), insbesondere Radbremse, wobei die Druckbereitstellungseinrichtung (20) eine Zylinder-Kolben-Anordnung mit einem hydraulischen Druckraum (4) umfasst, deren Kolben (3) durch einen elektromechanischen Aktuator (1, 2) zur Erzeugung eines vorgebbaren Soll-Drucks ($P_{V,Soll}$) in dem hydraulischen Druckraum (4) verschiebbar ist, wobei eine Aktuatorposition als Motorwinkelposition des elektromechanischen Aktuators ermittelt wird, **dadurch gekennzeichnet, dass** ein Aktuatormoment ($M_{Akt}$), insbesondere ein Motordrehmoment, des elektromechanischen Aktuators (1, 2) ermittelt wird und dass ein Druckwert ($P_{V,Est}$, $P_{V,Ist}^{B}$, $P_{V,Ist}^{C}$) für den Druck ($P_V$) in dem hydraulischen Druckraum (4) mit Hilfe des Aktuatormoments ($M_{Akt}$) und der Aktuatorposition ($\varphi_{Akt}$) unter Berücksichtigung eines Druckmodells bestimmt wird (30).

2. Verfahren nach Anspruch 1, **dadurch gekennzeichnet, dass** der mit Hilfe des Aktuatormoments ($M_{Akt}$) und der Aktuatorposition ($\varphi_{Art}$) bestimmte Druckwert ($P_{V,Est}$, $P_{V,Ist}^{B}$, $P_{V,Ist}^{C}$) als Ist-Druck ($P_{V,Ist}$) zur Einstellung oder Einregelung des vorgegebenen Soll-Drucks ($P_{V,Soll}$) in dem hydraulischen Druckraum (4) herangezogen wird (31).

3. Verfahren nach Anspruch 1 oder 2, **dadurch gekennzeichnet, dass**, insbesondere zumindest zeitweise oder bei Vorliegen einer Bedingung, der Druck in dem hydraulischen Druckraum (4) mittels eines Drucksensors (18) gemessen wird ($P_{V,Mess}$).

4. Verfahren nach Anspruch 3, **dadurch gekennzeichnet, dass** eine Bestimmung oder eine Anpassung von zumindest einem Parameter ($M_{c,Est}$, $\alpha_{Est}$) des Druckmodells anhand des gemessenen Drucks ($P_{V,Mess}$), des ermittelten Aktuatormoments ($M_{Akt}$) und der ermittelten Aktuatorposition ($\varphi_{Art}$) durchgeführt wird.

5. Verfahren nach Anspruch 4, **dadurch gekennzeichnet, dass** die Bestimmung oder die Anpassung des oder der Parameter ($M_{c,Est}$, $\alpha_{Est}$) des Druckmodells durchgeführt wird, wenn der gemessene Druck ($P_{V,Mess}$) kleiner oder gleich einem ersten Schwellenwert ($P_1$) ist, und dass der oder die Parameter des Druckmodells beibehalten werden, wenn der gemessene Druck ($P_{V,Mess}$) größer als der erste Schwellenwert ($P_1$) ist.

6. Verfahren nach Anspruch 4 oder 5, **dadurch gekennzeichnet, dass** bei der Anpassung der Parameter ($M_{c,Est}$, $\alpha_{Est}$) des Druckmodells stets nur ein einziger der Parameter zu einem Zeitpunkt oder in einem Zeitintervall verändert wird, und dass insbesondere das Maß der Änderung des Parameters ($\Delta M_{c,Korr}$, $\Delta_{\alpha Korr}$) vorgegeben ist.

7. Verfahren nach einem der Ansprüche 3 bis 6, **dadurch gekennzeichnet, dass** der gemessene Druck ($P_{V,Mess}$) als Ist-Druck ($P_{V,Ist}{}^A$) zur Einstellung oder Einregelung des Soll-Drucks ($P_{V,Soll}$) herangezogen wird, solange der gemessene Druck ($P_{V,Mess}$) kleiner oder gleich einem zweiten Schwellenwert ($P_2$) ist, wobei der zweite Schwellenwert ($P_2$) insbesondere größer oder gleich dem ersten Schwellenwert ($P_1$) ist.

8. Verfahren nach einem der Ansprüche 3 bis 7, **dadurch gekennzeichnet, dass** anhand des Druckmodells aus dem Aktuatormoment ($M_{Akt}$) und der Aktuatorposition ($\varphi_{Art}$) ein Druckwert ($P_{V,Est}$) bestimmt wird.

9. Verfahren nach Anspruch 8, **dadurch gekennzeichnet, dass** aus dem gemessenen Druck ($P_{V,Mess}$) und dem anhand des Druckmodells aus dem Aktuatormoment ($M_{Akt}$) und der Aktuatorposition ($\varphi_{Akt}$) bestimmten Druckwert ($P_{V,Est}$) ein Ist-Druckwert ($P_{V,Ist}{}^B$) berechnet wird, der als Ist-Druck zur Einstellung oder Einregelung des vorgegebenen Soll-Drucks ($P_{V,soll}$) herangezogen wird, insbesondere wenn der gemessene Druck ($P_{V,Mess}$) größer als ein zweiter Schwellenwert ($P_2$) und kleiner als ein dritter Schwellenwert ($P_{Mess,Max}-\Delta P$) ist.

10. Verfahren nach Anspruch 9, **dadurch gekennzeichnet, dass** der Ist-Druckwert ($P_{V,Ist}{}^B$) durch gewichtete Mittelung mit einem Gewichtungsfaktor ($\lambda$) aus dem gemessenen Druck ($P_{V,Mess}$) und dem bestimmten Druckwert ($P_{V,Est}$) berechnet wird, wobei der Gewichtungsfaktor ($\lambda$) in Abhängigkeit von dem gemessenen Druck ($P_{V,Mess}$) und einem Messbereichsendwert ($P_{Mess,Max}$) des Drucksensors (18) gewählt wird.

11. Verfahren nach einem der Ansprüche 8 bis 10, **dadurch gekennzeichnet, dass** der anhand des Druckmodells aus dem Aktuatormoment ($M_{Akt}$) und der Aktuatorposition ($\varphi_{Art}$) bestimmte Druckwert ($P_{V,Est}$) als Ist-Druck ($P_{V,Ist}{}^C$) zur Einstellung oder Einregelung des Soll-Drucks ($P_{V,Soll}$) herangezogen wird, wenn der gemessene Druck ($P_{V,Mess}$) größer als ein dritter Schwellenwert ($P_{Mess,Max}-\Delta P$) ist.

12. Verfahren nach einem der Ansprüche 9 bis 11, **dadurch gekennzeichnet, dass** der dritte Schwellenwert ($P_{Mess,Max}-\Delta P$) kleiner als ein Messbereichsendwert ($P_{Mess,Max}$) des Drucksensors (18) gewählt ist.

13. Verfahren nach einem der Ansprüche 8 bis 12, **dadurch gekennzeichnet, dass** der anhand des Druckmodells aus dem Aktuatormoment ($M_{Akt}$) und der Aktuatorposition ($\varphi_{Art}$) bestimmte Druckwert ($P_{V,Est}$) als Ist-Druck ($P_{V,Ist}$) zur Einstellung oder Einregelung des Soll-Drucks ($P_{V,Soll}$ herangezogen wird, wenn ein Ausfall des Drucksensors (18) erkannt wird oder kein gemessener Druck ($P_{V,Mess}$) vorliegt.

14. Bremsanlage, insbesondere für Kraftfahrzeuge, mit zumindest einer hydraulisch betätigbaren Bremse (9), insbesondere Radbremse, und einer mittels einer elektronischen Steuer- und Regeleinheit ansteuerbaren Druckbereitstellungseinrichtung (20), mittels welcher die Bremse (9) hydraulisch betätigbar ist, wobei die Druckbereitstellungseinrichtung (20) eine Zylinder-Kolben-Anordnung mit einem hydraulischen Druckraum (4) umfasst, deren Kolben (3) durch einen elektromechanischen Aktuator (1, 2) zur Erzeugung eines vorgebbaren Soll-Drucks ($P_{V,Soll}$) in dem hydraulischen Druckraum (4) verschiebbar ist, wobei die Bremsanlage einen Drucksensor (18) zur Messung des Drucks in dem hydraulischen Druckraum (4) und einen Positionssensor (16) zur Messung einer Aktuatorposition

($\varphi_{Akt}$), insbesondere einer Motorwinkelposition, des elektromechanischen Aktuators (1, 2) umfasst, **dadurch gekennzeichnet, dass** die Bremsanlage ein Mittel (17) zur Ermittlung eines Aktuatormoments ($M_{Akt}$), insbesondere eines Motordrehmoments, des elektromechanischen Aktuators (1, 2) umfasst, und dass die elektronische Steuer- und Regeleinheit Mittel zur Durchführung eines Verfahrens gemäß einem der Ansprüche 1 bis 13 umfasst.

## Claims

1. Method for operating a brake system, in particular for motor vehicles, comprising an electrically controllable pressure supplying device (20) for hydraulically activating at least one brake (9), in particular a wheel brake, wherein the pressure supplying device (20) comprises a cylinder-piston arrangement with a hydraulic pressure chamber (4), the pistons (3) of which can be moved by an electromechanical actuator (1, 2) in order to generate a predefineable setpoint pressure ($P_{V,setp}$) in the hydraulic pressure chamber (4), wherein an actuator position is detected as a motor angle position of the electromechanical actuator **characterized in that** an actuator torque ($T_{actr}$), in particular a motor torque, of the electromechanical actuator (1, 2) is detected and **in that** a pressure value ($P_{V,est}$, $P_{V,act}^B$, $P_{V,act}^C$) for the pressure ($P_V$) is determined (30) in the hydraulic pressure chamber (4) using the actuator torque ($T_{actr}$) and the actuator position ($\varphi_{actr}$) taking into account a pressure model.

2. Method according to Claim 1, **characterized in that** the pressure value ($P_{V,est}$, $P_{V,act}^B$, $P_{V,act}^C$), which is determined using the actuator torque ($T_{actr}$) and the actuator position ($\varphi_{actr}$), is used (31) as an actual pressure ($P_{V,act}$) for setting or adjusting the predefined setpoint pressure ($P_{V,setp}$) in the hydraulic pressure chamber (4).

3. Method according to Claim 1 or 2, **characterized in that** the pressure in the hydraulic pressure chamber (4) is measured ($P_{V,meas}$) by means of a pressure sensor (18), in particular at least temporarily or when a condition is met.

4. Method according to Claim 3, **characterized in that** at least one parameter ($M_{c,est}$, $\alpha_{est}$) of the pressure model is determined or adapted on the basis of the measured pressure ($P_{V,meas}$), the detected actuator torque ($T_{actr}$) and the detected actuator position ($\varphi_{actr}$).

5. Method according to Claim 4, **characterized in that** the parameter or parameters ($M_{c,est}$, $\alpha_{est}$) of the pressure model is/are determined or adapted if the measured pressure ($P_{V,meas}$) is lower than or equal to a first threshold value ($P_1$), and **in that** the parameter or parameters of the pressure model is/are maintained if the measured pressure ($P_{V,meas}$) is higher than the first threshold value ($P_1$).

6. Method according to Claim 4 or 5, **characterized in that** when the parameters ($M_{c,est}$, $\alpha_{est}$) of the pressure model are adapted, only one of the parameters is ever changed at a time or in a time interval, and **in that** in particular the extent of the change of the parameter ($\Delta M_{c,corr}$, $\Delta\alpha_{c,corr}$) is predefined.

7. Method according to one of Claims 3 to 6, **characterized in that** the measured pressure ($P_{V,meas}$) is used as an actual pressure ($P_{V,act}^A$) for setting or adjusting the setpoint pressure ($P_{V,setp}$) as long as the measured pressure ($P_{V,meas}$) is lower than or equal to a second threshold value ($P_2$), wherein the second threshold value ($P_2$) is, in particular, higher than or equal to the first threshold value ($P_1$).

8. Method according to one of Claims 3 to 7, **characterized in that** a pressure value ($P_{V,est}$) is determined from the actuator torque ($T_{actr}$) and the actuator position ($\varphi_{actr}$) on the basis of the pressure model.

9. Method according to Claim 8, **characterized in that** an actual pressure value ($P_{V,act}^B$) is calculated from the measured pressure ($P_{V,meas}$) and the pressure value ($P_{V,est}$) which is determined from the actuator torque ($T_{actr}$) and the actuator position ($\varphi_{actr}$) on the basis of the pressure model, which actual pressure value ($P_{V,act}^B$) is used as an actual pressure for setting or adjusting the predefined setpoint pressure ($P_{V,setp}$), in particular if the measured pressure ($P_{V,meas}$) is higher than a second threshold value ($P_2$) and lower than a third threshold value ($P_{meas,max}-\Delta P$).

10. Method according to Claim 9, **characterized in that** the actual pressure value ($P_{V,act}^B$) is calculated by weighted averaging with a weighting factor ($\lambda$) from the measured pressure ($P_{V,meas}$) and the determined pressure value ($P_{V,est}$), wherein the weighting factor ($\lambda$) is selected as a function of the measured pressure ($P_{V,meas}$) and a measuring range end value ($P_{meas,max}$) of the pressure sensor (18).

11. Method according to one of Claims 8 to 10, **characterized in that** the pressure value ($P_{V,est}$), which is determined from the actuator torque ($T_{actr}$) and the actuator position ($\varphi_{actr}$) on the basis of the pressure model, is used as an actual pressure ($P_{V,act}{}^{C}$) for setting or adjusting the setpoint pressure ($P_{V,setp}$) if the measured pressure ($P_{V,meas}$) is higher than a third threshold value ($P_{meas,max}$-$\Delta P$).

12. Method according to one of Claims 9 to 11, **characterized in that** the third threshold value ($P_{meas,\,max}$-$\Delta P$) is selected to be lower than a measuring range end value ($P_{meas,\,max}$) of the pressure sensor (18).

13. Method according to one of Claims 8 to 12, **characterized in that** the pressure value ($P_{V,est}$), which is determined from the actuator torque ($T_{actr}$) and the actuator position ($\varphi_{actr}$) on the basis of the pressure model, is used as an actual pressure ($P_{V,act}$) for setting or adjusting the setpoint pressure ($P_{V,setp}$) if a failure of the pressure sensor (18) is detected or there is no measured pressure ($P_{V,meas}$) available.

14. Brake system, in particular for motor vehicles, comprising at least one brake (9) which can be activated hydraulically, in particular a wheel brake, and a pressure supplying device (20) which can be actuated by means of an electronic open-loop and closed-loop control unit and by means of which the brake (9) can be activated hydraulically, wherein the pressure supplying device (20) comprises a cylinder-piston arrangement with a hydraulic pressure chamber (4), the pistons (3) of which can be moved by an electromechanical actuator (1, 2) in order to generate a predefineable setpoint pressure ($P_{V,setp}$) in the hydraulic pressure chamber (4), wherein the brake system comprises a pressure sensor (18) for measuring the pressure in the hydraulic pressure chamber (4) and a position sensor (16) for measuring an actuator position ($\varphi_{actr}$), in particular a motor angle position, of the electromechanical actuator (1, 2), **characterized in that** the brake system comprises a means (17) for determining an actuator torque ($T_{actr}$), in particular a motor torque, of the electromechanical actuator (1, 2), and **in that** the electronic open-loop and closed-loop control unit comprises means for carrying out a method according to one of Claims 1 to 13.

**Revendications**

1. Procédé permettant de faire fonctionner un système de freinage, en particulier pour des véhicules automobiles, avec un dispositif d'alimentation de pression (20) pouvant être commandé électriquement pour l'actionnement hydraulique d'au moins un frein (9), en particulier un frein de roue, pour lequel le dispositif d'alimentation de pression (20) comprend un montage vérin-piston avec une chambre de compression hydraulique (4), dont le piston (3) peut être déplacé dans la chambre de compression hydraulique (4) par un actionneur électromécanique (1, 2) pour produire une pression théorique ($P_{v,théor}$) préalablement spécifiable, pour lequel une position d'actionneur est déterminée en tant que position d'angle moteur de l'actionneur électromécanique, **caractérisé en ce qu'**un couple d'actionneur ($M_{act}$), en particulier un couple moteur, de l'actionneur électromécanique (1, 2) est déterminé, et **en ce qu'**une valeur de pression ($P_{v,est}$, $P_{v,effec}{}^{B}$, $P_{v,effec}{}^{C}$) pour la pression ($P_{v}$) dans la chambre de compression hydraulique (4) est définie à l'aide du couple d'actionneur ($M_{act}$) et de la position d'actionneur ($\varphi_{act}$) en tenant compte d'un modèle de pression (30).

2. Procédé selon la revendication 1 **caractérisé en ce qu'**il est fait utilisation de la valeur de pression ($P_{v,est}$, $P_{v,effec}{}^{B}$, $P_{v,effec}$C) définie à l'aide du couple d'actionneur ($M_{act}$) et de la position d'actionneur ($\varphi_{act}$) en tant que pression effective ($P_{v,effec}$) pour la mise au point ou le réglage de la pression théorique ($P_{v,théor}$) préalablement spécifiée dans la chambre de compression hydraulique (4) (31) .

3. Procédé selon la revendication 1 ou 2 **caractérisé en ce que**, en particulier au moins temporairement ou en présence d'une condition, la pression dans la chambre de compression hydraulique (4) est mesurée ($P_{v,mes}$) au moyen d'un capteur de pression (18) .

4. Procédé selon la revendication 3 **caractérisé en ce qu'**on effectue une détermination ou une adaptation d'au moins un paramètre ($M_{c,est}$, $\alpha_{est}$) du modèle de pression à l'aide de la pression mesurée ($P_{V,mes}$), du couple d'actionneur ($M_{act}$) déterminé et de la position d'actionneur déterminée ($\varphi_{act}$).

5. Procédé selon la revendication 4 **caractérisé en ce qu'**on effectue la détermination ou l'adaptation du ou des paramètre (s) ($M_{C,est}$, $\alpha_{est}$) du modèle de pression, si la pression mesurée ($P_{V,mes}$) est inférieure ou égale à une première valeur seuil ($P_{1}$) et **en ce que** l'on conserve le ou les paramètre(s) du modèle de pression, si la pression mesurée ($P_{V,mes}$) est supérieure à la première valeur seuil ($P_{1}$).

6. Procédé selon la revendication 4 ou 5 **caractérisé en ce que** lors de l'adaptation des paramètres ($M_{C,est}$, $\alpha_{est}$) du

modèle de pression, un seul des paramètres est toujours modifié à un moment ou dans un intervalle de temps et **en ce qu'**en particulier la mesure de la variation du paramètre ($\Delta M_{C,corr}$, $\Delta\alpha_{corr}$) est préalablement spécifiée.

7. Procédé selon l'une quelconque des revendications 3 à 6 **caractérisé en ce qu'**il est fait utilisation de la pression mesurée ($P_{V,mes}$) comme pression effective ($P_{v,effec}{}^A$) pour la mise au point ou le réglage de la pression théorique ($P_{v,théor}$) tant que la pression mesurée ($P_{V,mes}$) est inférieure ou égale à une deuxième valeur seuil ($P_2$), pour lequel la deuxième valeur seuil ($P_2$) est en particulier supérieure ou égale à la première valeur seuil ($P_1$).

8. Procédé selon l'une quelconque des revendications 3 à 7 **caractérisé en ce qu'**à l'aide du modèle de pression une valeur de pression ($P_{V,est}$) est définie à partir du couple d'actionneur ($M_{act}$) et de la position d'actionneur ($\varphi_{act}$).

9. Procédé selon la revendication 8 **caractérisé en ce qu'**à partir de la pression mesurée ($P_{V,mes}$) et de la valeur de pression ($P_{V,est}$) définie à l'aide du modèle de pression à partir du couple d'actionneur ($M_{act}$) et de la position d'actionneur ($\varphi_{act}$), une valeur de pression effective ($P_{V,théor}{}^B$) est calculée dont il est fait utilisation en tant que pression effective pour la mise au point ou le réglage de la pression théorique préalablement spécifiée ($P_{V,théor}$), en particulier si la pression mesurée ($P_{V,mes}$) est supérieure à une deuxième valeur seuil ($P_2$) et inférieure à une troisième valeur seuil ($P_{mes,max}$ -$\Delta P$).

10. Procédé selon la revendication 9 **caractérisé en ce que** la valeur de pression effective ($P_{V,eff}{}^B$) est calculée par la réalisation d'une moyenne pondérée avec un facteur de pondération ($\lambda$) à partir de la pression mesurée ($P_{V,mes}$) et de la valeur de pression définie ($P_{V,est}$), pour lequel le facteur de pondération ($\lambda$) est choisi en fonction de la pression mesurée ($P_{V,mes}$) et d'une valeur finale de gamme de mesures ($P_{mes,max}$) du capteur de pression (18).

11. Procédé selon l'une quelconque des revendications 8 à 10 **caractérisé en ce qu'**il est fait utilisation de la valeur de pression ($P_{V,est}$) définie à l'aide du modèle de pression à partir du couple d'actionneur ($M_{act}$) et de la position d'actionneur ($\varphi_{act}$) en tant que pression effective ($P_{V,eff}{}^C$) pour la mise au point ou le réglage de la pression théorique ($P_{V,théor}$), si la pression mesurée ($P_{V,mes}$) est supérieure à une troisième valeur seuil ($P_{mes,max}$-$\Delta P$).

12. Procédé selon l'une quelconque des revendications 9 à 11 **caractérisé en ce que** la troisième valeur seuil ($P_{mes,max}$-$\Delta P$) est choisie inférieure à une valeur finale de gamme de mesures ($P_{mes,max}$) du capteur de pression (18).

13. Procédé selon l'une quelconque des revendications 8 à 12 **caractérisé en ce qu'**il est fait utilisation de la valeur de pression ($P_{V,est}$) définie à l'aide du modèle de pression à partir du couple d'actionneur ($M_{act}$) et de la position d'actionneur ($\varphi_{act}$) en tant que pression effective ($P_{V,eff}$) pour la mise au point ou le réglage de la pression théorique ($P_{V,théor}$), si une défaillance du capteur de pression (18) est identifiée ou s'il n'y a pas de pression mesurée ($P_{V,mes}$).

14. Système de freinage, en particulier pour des véhicules automobiles, avec au moins un frein pouvant être actionné hydrauliquement (9), en particulier un frein de roue, et un dispositif d'alimentation de pression (20) pilotable au moyen d'une unité de commande et de régulation électronique, au moyen duquel le frein (9) peut être hydrauliquement actionné, pour lequel le dispositif d'alimentation de pression (20) comprend un montage vérin-piston avec une chambre de compression hydraulique (4), dont le piston (3) peut être déplacé dans la chambre de compression hydraulique (4) par un actionneur électromécanique (1, 2) pour produire une pression théorique ($P_{V,théor}$) préalablement spécifiable, pour lequel le système de freinage comprend un capteur de pression (18) pour mesurer la pression dans la chambre de compression hydraulique (4) et un capteur de position (16) pour mesurer une position d'actionneur ($\varphi_{act}$), en particulier une position d'angle moteur, de l'actionneur électromécanique (1, 2), **caractérisé en ce que** le système de freinage comprend un moyen (17) pour déterminer un couple d'actionneur ($M_{act}$), en particulier un couple moteur, de l'actionneur électromécanique (1, 2) et **en ce que** l'unité de commande et de régulation électronique comprend des moyens pour exécuter un procédé conformément à l'une quelconque des revendications 1 à 13.

Fig. 1

EP 2 718 158 B1

$M_{Akt}$     $\varphi_{Akt}$

$P_{V,Mess}$

30

$P_{V,Ist}$

$P_{V,Soll}$

31

$X_{Akt}$

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011029812 A1

- DE 102009008944 A1